(19) Europäisches Patentamt
European Patent Office
Office européen des brevets

(11) **EP 4 129 621 B1**

(12) **EUROPEAN PATENT SPECIFICATION**

(45) Date of publication and mention
of the grant of the patent:
**09.10.2024 Bulletin 2024/41**

(21) Application number: **21782013.3**

(22) Date of filing: **31.03.2021**

(51) International Patent Classification (IPC):
**B29C 45/76** *(2006.01)*　　**G05B 13/04** *(2006.01)*

(52) Cooperative Patent Classification (CPC):
**B29C 45/76; G05B 13/048; B29C 2045/7606;**
B29C 2945/76949; B29C 2945/76973

(86) International application number:
**PCT/JP2021/014073**

(87) International publication number:
**WO 2021/201187 (07.10.2021 Gazette 2021/40)**

(54) **APPARATUS, METHOD, AND PROGRAM**

VORRICHTUNG, VERFAHREN UND PROGRAMM

APPAREIL, PROCÉDÉ ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2020 JP 2020064511**

(43) Date of publication of application:
**08.02.2023 Bulletin 2023/06**

(73) Proprietor: **Asahi Kasei Kabushiki Kaisha**
**Tokyo 1000006 (JP)**

(72) Inventors:
• **KIMURA, Ippei**
**Tokyo 1000006 (JP)**

• **MORITA, Tatsuya**
**Tokyo 1000006 (JP)**

(74) Representative: **Hoffmann Eitle**
**Patent- und Rechtsanwälte PartmbB**
**Arabellastraße 30**
**81925 München (DE)**

(56) References cited:
JP-A- 2017 081 071　JP-A- 2017 119 425
JP-A- H0 435 923　　US-A1- 2008 102 147
US-B2- 7 216 005

**Description**

BACKGROUND

1. TECHNICAL FIELD

The present invention relates to an apparatus, a method, and a program.

2. RELATED ART

When molding a resin molded product, an operator of a manufacturing apparatus 2 needs to adjust molding conditions for reducing generation of defective products. Patent Document 1 describes that, as a support for the operator, fluctuations of evaluation items due to the molding conditions are predicted and displayed in a graph.
Patent Document 1: Japanese Patent Application Publication No. 2006-123172

US 2008/102147 A1 teaches a support apparatus of an injection-molding machine, wherein an apparatus for supporting a worker involved in operating an injection-molding machine includes a neural network in which a prediction function is determined based on test molding. The worker enters a portion of a plurality of molding conditions in the form of a fixed value using a first input apparatus, thereby obtaining a relational graph of the remaining portion of the plurality of molding conditions and the predicted quality value in which the quality of a molded article is predicted.

JP 2017 081071 A considers molding conditions and teaches to: set a constraint condition and an objective function based on a mathematical programming to molding data related to an input parameter and an output parameter in advance; set an optimization processing program for determining an optimized molding condition related to the input parameter satisfying the constraint condition and the objective function by the mathematical programming; during production utilization, acquire molding data related to the output parameter in a plasticization step; then, determine a prediction function and the optimized molding condition optimized by the optimization processing program from the molding data related to the output parameter; then, change a molding condition in other shot after an optional shot is completed by the optimized molding condition.

US 7 216 005 B2 describes a control apparatus for an injection molding machine, wherein test molding and mass-production molding are performed by an injection molding machine that includes a control apparatus in which neural networks are used. A quality prediction function determined based on the test molding is revised as necessary during mass-production molding.

In JP 2017 119425 A considers molding conditions and related to molding quality molding data during a molding process and evaluation information related to molding quality are set in a data treatment part as constraint conditions based on a mathematical programming on input parameters and output parameters, prediction function based on learning of a neutral network is set as an objective functionand an optimal treatment program for obtaining an optimized molding condition related to the constraint condition and the objective function by the mathematical programming is set, the molding data related to the output parameters during the molding process is detected in the data treatment part during production utilization, the optimized molding condition by the optimization treatment program is obtained based on the molding data related to the output parameters and existing molding condition is changed based on the obtained molding conditions.

However, in Patent Document 1, a prediction accuracy of the evaluation items may change depending on a range of the molding conditions, and thus an accuracy in adjusting the molding conditions may deteriorate.

The present invention is defined in the independent claims. Further preferred embodiments may be derived from the dependent claims.

According to a first aspect of the present invention, an apparatus configured to support resin molding is provided. The apparatus includes a prediction unit configured to generate a probability distribution of prediction values of analysis target characteristics of a resin molded body, that correspond to values of a plurality of molding factors of the resin molding. The apparatus includes a display processing unit configured to execute display processing for causing a display apparatus to display the probability distribution of the prediction values of the analysis target characteristics.

The prediction unit is configured to calculate a change of the probability distribution of the prediction values of the analysis target characteristics when a value of at least one of the plurality of molding factors of the resin molding is changed within a predetermined range. The display processing unit is configured to execute display processing for causing the display apparatus to display the change of the probability distribution of the prediction values of the analysis target characteristics.

The prediction unit may be configured to calculate, as an indicator that indicates the change of the probability distribution, a change of a mean value and a change of a standard deviation of the prediction values of the analysis target characteristics. The display processing unit may be configured to execute display processing for causing the display apparatus to display the change of the mean value and the change of the standard deviation.

The display processing unit may be configured to execute display processing for causing the display apparatus to display a range of the molding factors that have a possibility of satisfying a target value of the analysis target characteristics.

The apparatus may further include an input unit configured to accept a designation of a value of at least one of the plurality of molding factors of the resin molding from a user. The display processing unit may be configured to execute display processing for causing the display apparatus to display, together with the probability distribution of the prediction values, the probability distribution of the prediction values of the analysis target characteristics at the designated value of the molding factor.

The prediction unit may be configured to include a model for generating the probability distribution of the prediction values of the analysis target characteristics according to an input of data with respect to at least one of the plurality of molding factors of the resin molding.

The prediction unit may be configured to generate each of the prediction values of the analysis target characteristics using a plurality of the models, and calculate a mean value and a standard deviation of the generated prediction values.

The apparatus may further include a recommendation unit configured to generate a recommendation condition as a combination of the plurality of molding factors having a highest probability of satisfying the target value of the analysis target characteristics. The display processing unit may be configured to execute display processing for causing the display apparatus to display the recommendation condition together with the change of the probability distribution of the prediction values.

The prediction unit may be configured to include an acquisition unit configured to acquire learning data including sets of the values of the plurality of molding factors and values of the analysis target characteristics that are obtained as a result of performing the resin molding in advance. The prediction unit may be configured to include a learning unit configured to learn the model for generating the prediction values of the analysis target characteristics from the values of the plurality of molding factors using the learning data.

The prediction unit may be configured to calculate the probability of satisfying the target value of the analysis target characteristics in at least one of the plurality of molding factors of the resin molding. The display processing unit may be configured to execute display processing for causing the display apparatus to display the probability of satisfying the target value of the analysis target characteristics together with the probability distribution of the prediction values.

The prediction unit may be configured to calculate a change of the probability of satisfying the target value of the analysis target characteristics when a value of at least one of the plurality of molding factors of the resin molding is changed within a predetermined range. The display processing unit may be configured to execute display processing for causing the display apparatus to display the change of the probability of satisfying the target value of the analysis target characteristics together with the probability distribution of the prediction values.

The recommendation unit may generate a plurality of recommendation conditions, and the respective recommendation conditions may be generated with respect to a plurality of types of analysis target characteristics.

The prediction unit may obtain, from models respectively corresponding to the plurality of types of analysis target characteristics, a probability distribution of the prediction values of the corresponding analysis target characteristics.

Assuming that the probability distribution of the prediction values becomes a Gaussian distribution, the recommendation unit may calculate a probability by which the analysis target characteristics satisfy a predetermined condition based on the mean value and standard deviation of the prediction values. The probability of satisfying the predetermined condition may be a probability by which the analysis target characteristics fall below the target value, a probability by which the analysis target characteristics exceed the target value, or a probability by which the analysis target characteristics fall within a target range.

The recommendation unit may calculate, for the plurality of analysis target characteristics, a joint probability by which a combination of the plurality of molding factors satisfies a predetermined criteria, and generate a recommendation condition using an optimization algorithm so as to maximize the joint probability.

The learning unit may add, to the learning data, values of the molding factors of the recommendation condition generated by the recommendation unit assuming that the values of the analysis target characteristics corresponding to the recommendation condition do not satisfy the target values. The recommendation unit may generate a recommendation condition different from the above-described recommendation condition from prediction values that use models obtained after learning by the added learning data.

Upon the user inputting a particular value of the molding factor to the input unit, the display processing unit may cause the display apparatus to display such that the corresponding probability distribution of the prediction values overlaps at a position corresponding to the particular value in the display of the change of the probability distribution of the prediction values.

According to a second aspect of the present invention, a method of supporting resin molding is provided. The method includes generating a probability distribution of prediction values of analysis target characteristics of a resin molded body, that correspond to values of a plurality of molding factors of the resin molding. The method includes executing display processing for causing a display apparatus to display the probability distribution of the prediction values of the analysis target characteristics.

In the method, the generating of the probability distribution of the prediction values of the analysis target characteristics includes calculating a change of the probability distribution of the prediction values of the analysis target characteristics of the molded resin when a value of at least one of the plurality of molding factors of the resin molding is changed within a predetermined range. The executing of the display processing for causing the display apparatus to display the probability distribution of the prediction values includes executing display processing for causing the display apparatus to display the change of the probability distribution of the prediction values of the analysis target characteristics.

According to a third aspect of the present invention, a program is provided. When executed by a computer, the program causes the apparatus to perform operations of generating a probability distribution of prediction values of analysis target characteristics of a resin molded body, that correspond to values of a plurality of molding factors of resin molding. The program causes the apparatus to perform operations of executing display processing for causing a display apparatus to display the probability distribution of the prediction values of the analysis target characteristics.

The summary clause does not necessarily describe all necessary features of the embodiments of the present invention.

BRIEF DESCRIPTION OF THE DRAWINGS

Fig. 1 shows a system 1 according to the present embodiment.

Fig. 2 shows an example of a screen 200 displayed by a display unit 60 according to the present embodiment.

Fig. 3 shows another example of a screen 300 displayed by the display unit 60 according to the present embodiment.

Fig. 4 shows another example of a screen 400 displayed by the display unit 60 according to the present embodiment.

Fig. 5 shows a model learning flow in a supporting apparatus 3 according to the present embodiment.

Fig. 6 shows a molding factor display flow in the supporting apparatus 3 according to the present embodiment.

Fig. 7 shows another example of a screen 500 displayed by the display unit 60 according to the present embodiment.

Fig. 8 shows another example of a screen 600 displayed by the display unit 60 according to the present embodiment.

Fig. 9 shows another example of a screen 700 displayed by the display unit 60 according to the present embodiment.

Fig. 10 shows an example of a computer 2200 in which a plurality of aspects of the present invention may be wholly or partly embodied.

DESCRIPTION OF EXEMPLARY EMBODIMENTS

Hereinafter, the present invention will be described through embodiments of the invention, but the following embodiments do not limit the invention according to the claims. In addition, not all the combinations of features described in the embodiments are necessarily essential for a solution of the invention.

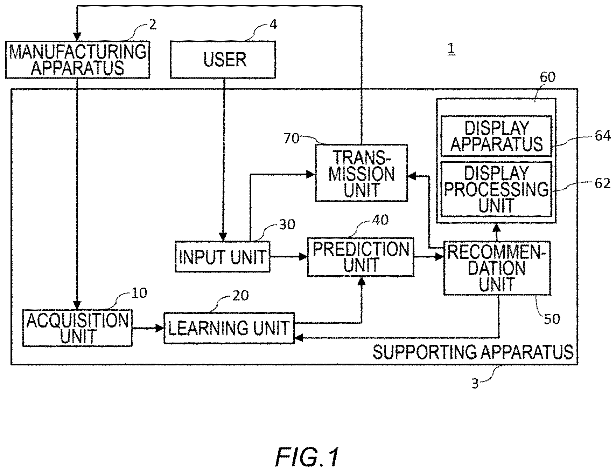

Fig. 1 shows a system 1 according to the present embodiment. The system 1 fabricates a resin molded material by adjusting molding conditions of a resin. The system 1 includes a manufacturing apparatus 2 for a resin molded material and a supporting apparatus 3.

As an example, a resin composition used in fabricating a resin molded material is polyethylene, acrylonitrile, polyamide, or the like, or reinforced plastics obtained by adding a glass fiber or the like to a resin.

The manufacturing apparatus 2 is connected to the supporting apparatus 3 via wires or wirelessly and fabricates a resin molded material molded in a desired shape by injection molding, in-mold molding, or the like. The manufacturing apparatus 2 may evaluate a plurality of analysis target characteristics for a molded resin (resin molded body) and transmit data indicating a plurality of molding factors and the analysis target characteristics of the molded resin to the supporting apparatus 3.

Here, the plurality of molding factors may be factors that affect quality of the resin molded material or may include molding conditions set in the manufacturing apparatus 2. As an example, the plurality of molding factors may be at least one of a mold thickness, a mold temperature, a cooling time, an injection temperature, an injection pressure maximum value, a holding pressure, a screw speed, a measurement value, or the like. Further, the plurality of molding factors may include at least one of a temperature of an environment where the manufacturing apparatus 2 is set, a humidity, a molding shape, or the like. Values of the plurality of molding factors may include discrete values that indicate presence/absence (e.g., whether predetermined material is included in resin), a rank (e.g., rank A, B, or C regarding resin quality, price, etc.), a resin type, or the like.

The analysis target characteristics may be evaluation items for judging whether the resin molded material is a defective product. As an example, the analysis target characteristics may include at least one of a dimension of the resin molded material, an intensity, a Young's modulus, an error from a target dimension, a mode, number, area, or density of a defect caused in the resin molded material, a position of the defect, or the like.

The supporting apparatus 3 is an example of an apparatus that supports resin molding. The supporting apparatus 3 is capable of supporting an adjustment of molding conditions by displaying prediction values of the analysis target characteristics corresponding to a set of the plurality of molding factors to a user 4 such as an operator of the manufacturing apparatus 2. The supporting apparatus 3 includes an acquisition unit 10, a learning unit 20, an input unit 30, a prediction unit 40, a recommendation unit 50, and a display unit 60.

The acquisition unit 10 is connected to the manufacturing apparatus 2. The acquisition unit 10 acquires learning data including a set of the values of the plurality of molding factors and the values of the analysis target characteristics that are obtained as a result of performing resin molding in advance. The acquisition unit 10 may acquire the learning data from at least one of the manufacturing apparatus 2, a website, or an external recording medium. The set of the values of the plurality of molding factors and the values of the analysis target characteristics may be a set of setting values of the plurality of molding factors obtained when performing the resin molding in advance in the manufacturing apparatus 2 and the values of the analysis target characteristics obtained by evaluating the resin molded material fabricated by the resin molding.

The learning unit 20 is connected to the acquisition unit 10. The learning unit 20 learns a model for generating a probability distribution of the prediction values of the analysis target characteristics from the values of the plurality of molding factors using the learning data acquired by the acquisition unit 10. The learning unit 20 may generate and update the model using the learning data. The learning unit 20 may store the learning data acquired from the acquisition unit 10 or the like in a database.

The input unit 30 may be for accepting inputs from the user 4 and may be, for example, a keyboard, a mouse, or a touch panel. Input to the input unit 30 from the user 4 is data indicating at least one display condition for displaying on the supporting apparatus 3. For example, the display condition includes at least one of a value of one of the plurality of molding factors (e.g., combination of particular values of plurality of molding factors, range of at least one of plurality of molding factors, or change of value of at least one of plurality of molding factors), a designation of at least one of the analysis target characteristics, or a target value of the analysis target characteristics. Note that the input unit 30 may also receive data indicating the display condition from a terminal (e.g., personal computer, tablet, or smartphone) of the user 4. Further, the input unit 30 may also accept an input of a molding condition for performing molding in the manufacturing apparatus 2.

The prediction unit 40 is connected to the learning unit 20 and the input unit 30. According to an input of data regarding at least one of the values of the plurality of molding factors, the prediction unit 40 receives a model for generating a distribution of the prediction values of the analysis target characteristics from the learning unit 20 and holds the model. Using the data input from at least one of the input unit 30 or the acquisition unit 10 and the model, the prediction unit 40 generates a distribution of the prediction values of the analysis target characteristics of the molded resin that correspond to the values of the plurality of molding factors of the resin molding. The prediction unit 40 may output, based on the generated distribution of the prediction values, a mean value or central value and a standard deviation of the distribution. The prediction unit 40 may calculate a change of the probability distribution of the prediction values of the analysis target characteristics when a value of at least one of the plurality of molding factors of the resin molding is changed within a predetermined range (e.g., within settable range of corresponding molding factor). In this case, the prediction unit 40 may calculate, as an indicator that indicates the change of the probability distribution of the prediction values, a change of the mean value or central value and a change of the standard deviation of the prediction values of the analysis target characteristics. The prediction unit 40 transmits the probability distribution of the prediction values to the recommendation unit 50. The prediction unit 40 may also transmit the learning data acquired by the acquisition unit 10 to the recommendation unit 50.

The recommendation unit 50 is connected to the prediction unit 40. The recommendation unit 50 generates a recommendation condition as a combination of the plurality of molding factors having a highest probability of satisfying the target value of the analysis target characteristics. The recommendation unit 50 may generate a recommendation condition in which at least one of the plurality of molding factors is changed from a current value (value that is currently optimal). The recommendation unit 50 may generate a recommendation condition using at least one of the molding factors designated by the user 4 via the input unit 30 as the molding factor to be changed. The recommendation unit 50 may transmit the generated recommendation condition to the learning unit 20 as learning data. Further the recommendation unit 50 may transmit the recommendation condition to the manufacturing apparatus 2 as a molding condition for performing molding in the manufacturing apparatus 2. When the recommendation unit 50 generates a plurality of recommendation conditions, a recommendation condition to be transmitted to the manufacturing apparatus 2 out of the generated recommendation conditions may be selectable. The above-described selection may be performed according to an input received by the input unit 30.

The display unit 60 is connected to the recommendation unit 50. The display unit 60 includes a display processing unit 62 and a display apparatus 64. The display processing unit 62 executes display processing for causing the display apparatus 64 to display the probability distribution of the prediction values of the analysis target characteristics generated by the prediction unit 40. The display processing unit 62 may execute display processing for causing the display apparatus to display a recommendation condition together with the probability distribution of the prediction values. The display processing unit 62 may execute display processing for causing the display apparatus 64 to further display at least one of names of the analysis target characteristics, evaluation conditions, prediction data, names of the respective molding factors, a name of a resin type, units, settable ranges (e.g., ranges of molding factors input via input unit 30), or latest setting values. The display processing unit 62 may execute processing of generating a display screen, processing of outputting data requisite for display to the display apparatus 64 wirelessly or via wires, or the like. Further, the display apparatus 64 may be a display or the like included in the supporting apparatus 3 or may be an external display such as a display screen of the terminal of the user 4 and a display screen of the manufacturing apparatus 2.

The supporting apparatus 3 may further include a transmission unit 70 that transmits the molding condition to the manufacturing apparatus 2. The transmission unit 70 may receive the molding condition input to the input unit 30 and transmit it to the manufacturing apparatus 2, or may receive the recommendation condition generated by the recommendation unit 50 and transmit it to the manufacturing apparatus 2 as a molding condition.

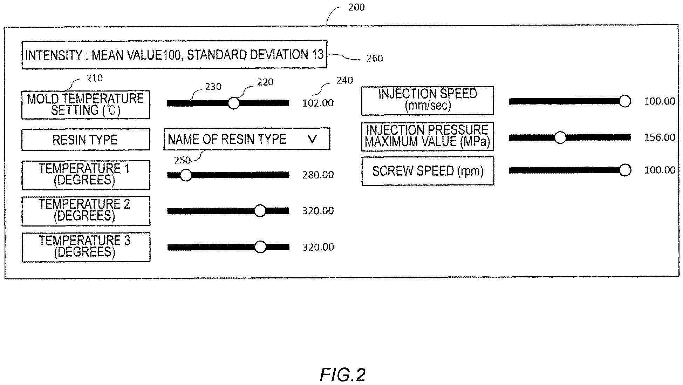

Fig. 2 shows an example of a screen 200 displayed by the display unit 60 according to the present embodiment. The display unit 60 displays, on the screen 200, item names 210 of the respective molding factors, slider bars 230 respectively indicating the settable ranges of the molding factors, pointers 220 respectively indicating positions of current values on the slider bars 230, current values 240 of the molding factors, a list box 250 including the name of a resin type, and a prediction value box 260 that indicates a distribution of the prediction values of the analysis target characteristics in the case of a combination of current values of the molding factors. In Fig. 2, the prediction value box 260 indicates that a mean value of a prediction value probability distribution of an intensity of a resin molded material is 100, and a standard deviation is 13.

While looking at the screen 200, the user 4 uses a mouse (input unit 30) to move the pointer 230 by a mouse cursor and changes a value of the molding factor. Accordingly, the mean value and standard deviation of the prediction value distribution in the prediction value box 260 of the analysis target characteristics change in real time on the screen by the prediction unit 40 according to the change of the set of values of the molding factors, and thus the user 4 can accurately determine the molding condition according to the probability distribution of the prediction values.

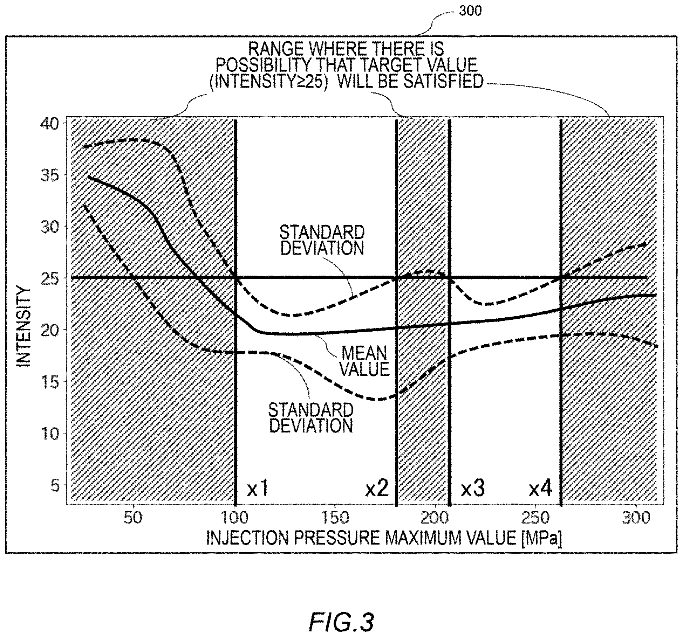

Fig. 3 shows another example of a screen 300 displayed by the display unit 60 according to the present embodiment. The display unit 60 executes display processing for causing the display apparatus 64 to display a change of the probability distribution of the prediction values of the analysis target characteristics on the screen 300. Specifically, the display processing unit 62 executes display processing for causing the display apparatus to display a graph that shows a change of the mean value and a change of the standard deviation. As an example, in the graph, a vertical axis represents a prediction value of the analysis target characteristic (intensity), and a horizontal axis represents an injection pressure maximum value (MPa). As an example, the display unit 60 may display a range in which there is a possibility that the target value (intensity $\geq 25$ in Fig. 3) will be satisfied. The display unit 60 may display the screen 300 in a popup window that is displayed when the user 4 selects the molding factor (injection pressure maximum value in Fig. 3) on the screen 200.

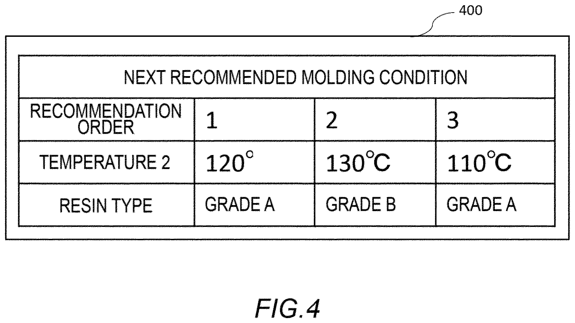

Fig. 4 shows another example of a screen 400 displayed by the display unit 60 according to the present embodiment. Regarding at least one of the plurality of molding factors selected by the user 4, the display unit 60 may display a plurality of recommendation conditions when changing the value from the current value. In the example of Fig. 4, the display unit 60 displays three recommendation conditions of ranks 1 to 3 on a drying temperature and a drying time. As shown in Fig. 4, the display unit 60 may display only the molding factors that are to be changed from the current values, or may also display values of other molding factors. The display unit 60 may display, on one screen, the screen 400 shown in Fig. 4 together with at least one of the screen 200 shown in Fig. 2 or the screen 300 shown in Fig. 3.

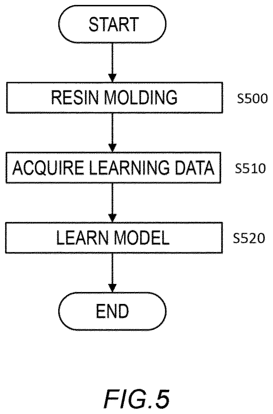

Fig. 5 shows a model learning flow in the supporting apparatus 3 according to the present embodiment. In Step S500, the manufacturing apparatus 2 performs resin molding. The manufacturing apparatus 2 may perform resin molding a plurality of times while changing the molding condition of the resin molded material.

In Step S510, the acquisition unit 10 acquires learning data from the manufacturing apparatus 2. The acquisition unit 10 may receive a plurality of combinations of the values of the plurality of molding factors and the values of the analysis target characteristics from the manufacturing apparatus 2. Further, the acquisition unit 10 may acquire the values of the plurality of molding factors and measurement data of the resin molded material (measurement values on dimension of molded resin, image data, etc.) from the manufacturing apparatus 2, and the acquisition unit 10 may acquire values of the analysis target characteristics by evaluating the resin molded material.

In Step S520, the learning unit 20 uses the learning data acquired by the acquisition unit 10 to learn a model for generating a probability distribution of the prediction values of the analysis target characteristics from the values of the plurality of molding factors. The learning unit 20 may receive a recommendation condition from the recommendation unit 50 as the learning data and thereafter use the learning data to learn a model. As an example, the model is a Gaussian process method or an ensemble model.

The learning unit 20 may periodically learn and update a model according to the acquisition of the learning data by the acquisition unit 10 in S5 10 or an input from the user 4. The learning flow may be terminated when power of the supporting apparatus 3 is turned off.

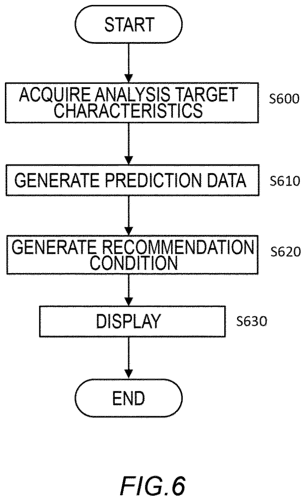

Fig. 6 shows a molding factor display flow in the supporting apparatus 3 according to the present embodiment. In Step S600, the input unit 30 may acquire a designation of the analysis target characteristics (e.g., intensity) and a designation of at least one of the target values of the analysis target characteristics from the user 4. The input unit 30 may also acquire, from the user 4, at least one of a designation of the molding factor, the value of which is to be changed, the values of the plurality of molding factors (e.g., currently optimal combination of values of molding factors or changed values), or ranges of the molding factors (e.g., settable ranges).

In Step S610, the prediction unit 40 uses the model to generate a distribution of prediction values of a particular analysis target characteristic acquired by the input unit 30 from the plurality of molding factors. The prediction unit 40 may also calculate a mean value and standard deviation of the generated distribution of the prediction values. When the model is the Gaussian process method, the learning unit 20 may define the probability distribution from learning data of the past and output the prediction value probability distribution of the analysis target characteristics with respect to input data including a combination of the molding factors or the like, using a Gaussian distribution. Further, when the model is the ensemble model, the learning unit 20 may generate, using a plurality of models respectively corresponding to the plurality of analysis target characteristics, each of the prediction values of the analysis target characteristics with respect to the input data including a combination of the molding factors or the like and output the values as the prediction value probability distribution.

The prediction unit 40 may generate a plurality of prediction values (or change thereof) of the analysis target characteristics when a corresponding molding factor out of the plurality of molding factors is changed within a predetermined range. For example, the predetermined range in which the change is made may be a range input by the user 4 via the input unit 30 for each of the molding factors or a settable range of the manufacturing apparatus 2 that is acquired from the manufacturing apparatus 2 via the acquisition unit 10.

In Step S620, the recommendation unit 50 may use the distribution of the prediction values predicted by the prediction unit 40 to generate a recommendation condition. For example, the recommendation unit 50 may use, as the recommendation condition, a combination of the molding factors having a high probability of satisfying the target value of the analysis target characteristics (e.g., satisfying particular range, range of threshold value or less, or range of threshold value or more) when one or a plurality of molding factors out of the plurality of molding factors is/are changed within a predetermined range. The recommendation unit 50 may calculate a probability of satisfying the target value of the analysis target characteristics for each of a plurality of combinations of the plurality of molding factors that are to become candidates of the recommendation condition, and determine the recommendation condition from the calculated probability based on a predetermined condition. The recommendation unit 50 may receive the molding factor to be changed that has been selected by the user 4 via the input unit 30. Further, the recommendation unit 50 may select, as the molding factor to be changed, a molding factor having a width of a change of the prediction values of the analysis target characteristics (width between minimum value and maximum value) exceeding a threshold value when the corresponding molding factor is changed within a predetermined range. Further, the recommendation unit 50 may transmit data indicating the recommendation condition to the manufacturing apparatus 2 and control the manufacturing apparatus 2 to fabricate a resin molded material according to the recommendation condition.

In Step S620, the display unit 60 displays the probability distribution of the prediction values of the analysis target characteristics and the recommendation condition on the screen. For example, the display unit 60 may display a screen like the screen shown in at least one of Fig. 2, 3, or 4 on the same screen or on a different screen. The display unit 60 may display a part of the change of the probability distribution of the prediction values from the prediction unit 40. For example, the display processing unit 62 may execute display processing for causing the display apparatus 64 to display a range of the molding factor that has a possibility of satisfying the target value of the analysis target characteristics input by the user 4. Here, for example, having the possibility of satisfying the target value of the analysis target characteristics may be a case where the target value of the analysis target characteristics or a range of the target value is included in the probability distribution of the prediction values of the analysis target characteristics. In the example of Fig. 3, when the target value of the analysis target characteristics is an intensity of 25 or more, the display unit 60 may indicate that, with ranges in which the mean value + standard deviation of the prediction values becomes 25 or more being ranges that have a possibility of satisfying the target value, the injection pressure maximum values of such ranges are x1 or less, between x2 and x3, and x4 or more.

The display unit 60 may display a combination of optimal values out of the plurality of combinations of the plurality of molding factors, a combination of latest current values, or a combination of values input from the user 4 via the input unit 30. The display unit 60 may generate and output screen data and cause an external display such as the terminal of the user 4 and the manufacturing apparatus 2 to display the data.

According to the present embodiment, since the probability distribution of the prediction values of the analysis target characteristics can be indicated to the user 4, the user 4 can select a value of the molding factor having a higher probability of satisfying the target value of the analysis target characteristics. Accordingly, the user 4 can easily perform a highly accurate adjustment of the molding condition. Further, since an optimal molding condition can be obtained according to the predicted analysis target characteristics without actually performing resin molding for all combinations of the molding factors, it becomes possible to accomplish a reduction of fabrication costs due to saving of a resin material and time. A period from the adjustment of the molding condition to a start of product fabrication can be shortened, and thus an operation rate of the manufacturing apparatus can be raised.

Next, an embodiment in which a plurality of recommendation conditions are generated for the plurality of analysis target characteristics will be described. The present embodiment can be executed in combination with at least one of the steps in the flows of Figs. 5 and 6. In the present embodiment, the supporting apparatus 3 may generate recommendation conditions using an evolutionary algorithm such as a genetic algorithm and simulated annealing.

In S620 of Fig. 6, the recommendation unit 50 generates a first recommendation condition as a combination of the plurality of molding factors having a highest probability of satisfying the target value of the analysis target characteristics, and transmits it to the learning unit 20. In S520 of Fig. 5, the learning unit 20 learns a model using the combination of the plurality of molding factors of the first recommendation condition as learning data. Next, in S610 of Fig. 6, the prediction unit 40 generates a probability distribution of the prediction values using the learned model and transmits it to the recommendation unit 50. Next, in S620 of Fig. 6, the recommendation unit 50 generates a second recommendation condition as a new combination of the plurality of molding factors having a highest probability of satisfying the target value of the analysis target characteristics from the probability distribution of the prediction values. The recommendation unit 50 may further transmit the second recommendation condition to the learning unit 20 and similarly generate a new recommendation condition. More specific descriptions will be given next.

In this example, the recommendation unit 50 generates the plurality of recommendation conditions while three types of analysis target characteristics (e.g., y1: number of defects, y2: intensity, y3: Young's modulus) are included in the recommendation condition. First, the prediction unit 40 randomly generates a plurality of combinations of the plurality of molding factors to be candidates of the recommendation conditions within a search range (e.g., settable range) (Step 1000). The prediction unit 40 inputs the generated combinations of the values of the molding factors to the y1, y2, and y3 models respectively corresponding to the three analysis target characteristics, and generates prediction mean values and prediction standard deviations of the analysis target characteristics (Step 1010). For example, for an i-th combination of the molding factors, the prediction mean values of the analysis target characteristics y1, y2, and y3 are indicated by $\mu_{i,1}$, $\mu_{i,2}$, and $\mu_{i,3}$, and the prediction standard deviations are indicated by $\sigma_{i,1}$, $\sigma_{i,2}$, and $\sigma_{i,3}$.

Next, the recommendation unit 50 calculates a probability by which the prediction values satisfy the target values of the analysis target characteristics (Step 1020). For example, assuming that the probability distribution of the prediction values is a Gaussian distribution, the recommendation unit 50 calculates, based on the prediction mean values and the prediction standard deviations, each of a probability $P_{i,1}$ that falls below a (target value) for the analysis target characteristics y 1, a probability $P_{i,2}$ that exceeds b (target value) for the analysis target characteristics y2, and a probability $P_{i,3}$ within a range from c to d (target range) for the analysis target characteristics y3 using the following three expressions.

(Expression 1)

$$P_{i,1} = \frac{1}{2}\left\{1 + erf\left(\frac{a - \mu_{i,1}}{\sqrt{2}\sigma_{i,1}}\right)\right\}$$

(Expression 2)

$$P_{i,2} = 1 - \frac{1}{2}\left\{1 + erf\left(\frac{b - \mu_{i,2}}{\sqrt{2}\sigma_{i,2}}\right)\right\}$$

(Expression 3)

$$P_{i,3} = \frac{1}{2}\left\{erf\left(\frac{d - \mu_{i,3}}{\sqrt{2}\sigma_{i,3}}\right) - erf\left(\frac{c - \mu_{i,3}}{\sqrt{2}\sigma_{i,3}}\right)\right\}$$

Next, the recommendation unit 50 calculates a joint probability $P_{i,all} = P_{i,1}*P_{i,2}*P_{i,3}$ by which the target values of all of the analysis target characteristics are satisfied and generates candidates of the recommendation condition using an optimization algorithm so as to maximize the joint probability $P_{i,all}$. The recommendation unit 50 may output, as the first recommendation condition, a combination of the plurality of molding factors obtained as the recommendation condition (Step 1030).

Next, the recommendation unit 50 transmits data indicating the first recommendation condition to the learning unit 20. The learning unit 20 adds, as mean values, the values of the analysis target characteristics regarding the first recommendation condition to a learning data database (Step 1040). At this time, the learning unit 20 may add the values of the molding factors of the first recommendation condition to the learning data database while assuming that the values of the corresponding analysis target characteristics do not satisfy the target values. Accordingly, by using the models after the learning by the learning data, the recommendation condition to be obtained becomes a combination of values different from that of the first recommendation condition.

Next, Steps 1000 to 1040 are repeated, and a combination of the molding factors obtained in Step 1030 at this time becomes the second recommendation condition. Further, Steps 1000 to 1040 are repeated so that a third recommendation condition, a fourth recommendation condition, and the like can be obtained.

According to the present embodiment, the plurality of recommendation conditions can be efficiently generated for the plurality of analysis target characteristics. Further, it becomes possible to adjust the molding condition based on the recommendation condition without actually performing resin molding a large number of times, and thus accomplish a reduction of resin molding costs, shortening of a period up to resin molding of a product, improvement of an operation rate of the manufacturing apparatus, and the like.

Note that the supporting apparatus 3 does not need to be connected to the manufacturing apparatus 2, and the acquisition unit 10 may acquire, as the learning data, data of resin molding in other manufacturing apparatuses, data recorded onto a recording medium, or data of a website.

Further, the supporting apparatus 3 does not need to include the learning unit 20, and a model may be provided from an external learning apparatus.

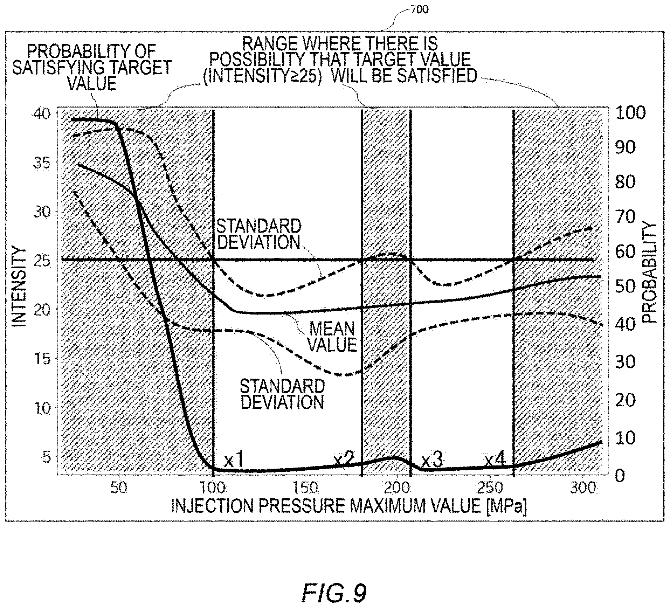

Fig. 9 shows a screen 500 displayed on the display apparatus 64. When the input unit 30 accepts a designation of a value of at least one of the plurality of molding factors of resin molding from the user 4, the display processing unit 62 may execute display processing for causing the display apparatus 64 to display a probability distribution of the prediction values of the analysis target characteristics at the designated value of the molding factor, together with the probability distribution of the prediction values. The display processing unit 62 may cause the display apparatus 64 to display the probability distribution of the prediction values of the analysis target characteristics at the designated value of the molding factor using a curve of the Gaussian distribution used in the prediction by the prediction unit 40 in Step S610. Note that a vertical axis of the curve of the Gaussian distribution (vertical axis direction in graph) represents the prediction value of the analysis target characteristics, and a horizontal axis (horizontal axis direction in graph) represents the prediction value probability.

Specifically, when a change of the probability distribution of the prediction values (mean value and standard deviation of prediction values) of the intensity corresponding to the injection pressure maximum value is displayed on the display apparatus 64 in Step S620, the display processing unit 62 may cause, upon the user 4 inputting injection pressure maximum values of 90 MPa and 265 Mpa to the input unit 30, the probability distribution of the prediction values of the intensity to be displayed while overlapping at positions corresponding to the injection pressure maximum values 90 MPa and 265 Mpa in the graph.

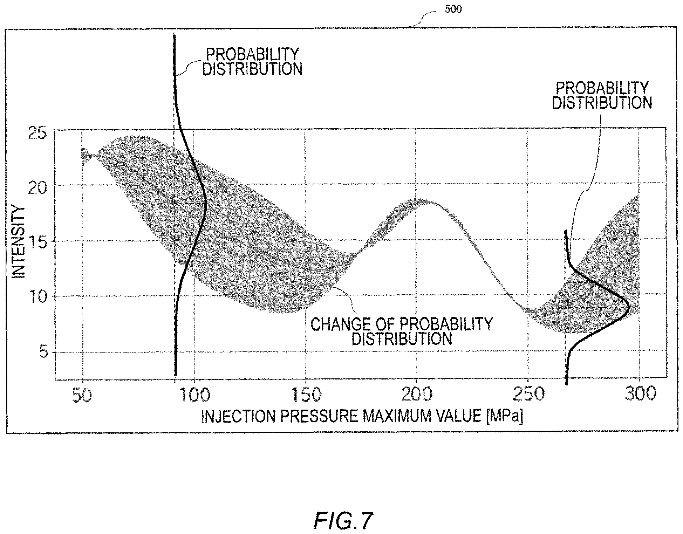

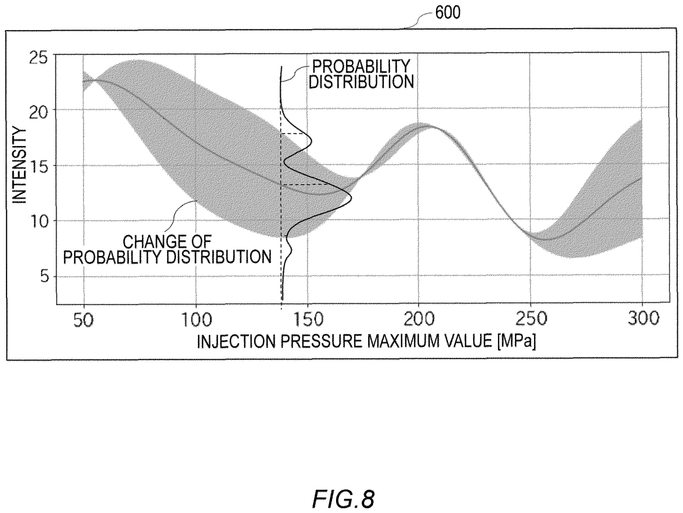

Fig. 8 shows a screen 600 displayed on the display apparatus 64. Similar to the screen 500, the display processing unit 62 causes the display apparatus 64 to display the probability distribution of the prediction values of the analysis target characteristics at the designated value of the molding factor. Note that when the prediction unit 40 uses a plurality of models for the prediction or the like, a plurality of peaks where the probability becomes high may be formed in the curve of the probability distribution as shown in Fig. 8. According to the embodiments as shown in Figs. 7 and 8, it becomes possible to adjust to an appropriate molding condition without actually performing resin molding a large number of times, and thus accomplish a reduction of resin molding costs, shortening of a period up to resin molding of a product, improvement of an operation rate of the manufacturing apparatus, and the like.

Fig. 9 shows a screen 700 displayed on the display apparatus 64. The display processing unit 62 may execute display processing for causing the display apparatus 64 to display the probability of satisfying the target values of the analysis target characteristics together with the probability distribution of the prediction values. The display processing unit 62 may execute display processing for causing the display apparatus 64 to display a change of the probability of satisfying the target values of the analysis target characteristics together with the probability distribution of the prediction values. The prediction unit may calculate the probability of satisfying the target values of the analysis target characteristics in at least one of the plurality of molding factors of the resin molding, and may calculate a change of the probability of satisfying the target values of the analysis target characteristics when a value of at least one of the plurality of molding factors of the resin molding is changed within a predetermined range, for example.

The screen shown in Fig. 9 may be a screen similar to the screen shown in Fig. 3 but additionally includes a change of the probability of satisfying the target value. When the user 4 inputs a target value (intensity $\geq$ 25 in Fig. 9) to the input unit 30, the display processing unit 62 may receive a probability $P_{i,2}$ by which the intensity exceeds the target value, that is calculated by the recommendation unit 50, and cause the display apparatus 64 to display a change of $P_{i,2}$ at the injection pressure maximum values of 0 to 300 Mpa while overlapping with the change of the probability distribution. According to such an embodiment, it becomes possible to make adjustments to values having a high probability, which is an appropriate molding condition, without actually performing resin molding a large number of times, and thus accomplish a reduction of resin molding costs, shortening of a period up to resin molding of a product, improvement of an operation rate of the manufacturing apparatus, and the like.

Note that the display processing unit 62 may display only the change of the probability of satisfying the target value in the graph, and also display the probability of satisfying the target value at the value of the molding factor designated by the user 4, at a position corresponding to the change of the probability distribution.

Note that the supporting apparatus 3 may be a PC, a server, a mobile terminal, or the like.

In addition, various embodiments of the present invention may also be described with reference to flowcharts and block diagrams, where the blocks may represent (1) a stage of a process in which an operation is performed or (2) a section of an apparatus that has a role of performing the operation. Certain steps and sections may be implemented by dedicated circuitry, programmable circuitry supplied together with computer-readable instructions stored on computer-readable media, and/or processors supplied together with computer-readable instructions stored on computer-readable media. The dedicated circuitry may include a digital and/or analog hardware circuit, or may include an integrated circuit (IC) and/or a discrete circuit. The programmable circuitry may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

The computer-readable medium may include any tangible device capable of storing instructions for execution by a suitable device, so that the computer-readable medium having the instructions stored therein will have a product including instructions that can be executed to create means for performing the operations designated in flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable media may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a BLU-RAY (registered trademark) disk, a memory stick, an integrated circuit card, and the like.

The computer-readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

The computer-readable instructions may be provided for a processor or programmable circuitry of a general purpose computer, special purpose computer, or other programmable data processing apparatuses locally or via a local area network (LAN) or a wide area network (WAN) such as the Internet, and the computer-readable instructions may be executed to create means for executing the operations designated in flowcharts or block diagrams. Examples of processors include computer processors, processing units, microprocessors, digital signal processors, controllers, microcontrollers, and the like.

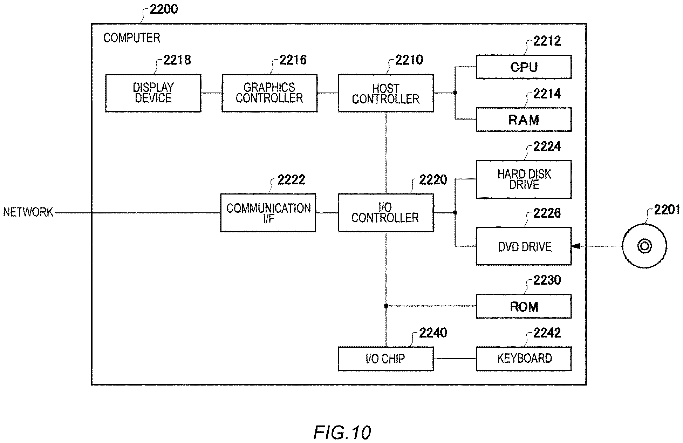

Fig. 10 shows an example of a computer 2200 in which a plurality of embodiments of the present invention may be embodied in whole or in part. A program that is installed in the computer 2200 can cause the computer 2200 to function as or perform operations associated with apparatuses of the embodiments of the present invention or one or more sections thereof, and/or cause the computer 2200 to perform processes of the embodiments of the present invention or steps thereof. Such programs may be executed by a CPU 2212 to cause the computer 2200 to perform certain operations associated with some or all of the blocks in the flowcharts and block diagrams described in the present specification.

The computer 2200 according to the present embodiment includes a CPU 2212, a RAM 2214, a graphics controller 2216, and a display device 2218, which are mutually connected by a host controller 2210. The computer 2200 further includes input/output units such as a communication interface 2222, a hard disk drive 2224, a DVD-ROM drive 2226, and an IC card drive, which are connected to the host controller 2210 via an input/output controller 2220. The computer further includes legacy input/output units such as a ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from the IC card, and/or writes programs and data to the IC card.

The ROM 2230 stores therein a boot program or the like executed by the computer 2200 at the time of activation, and/or a program depending on the hardware of the computer 2200. The input/output chip 2240 may also connect various input/output units to the input/output controller 2220 via a parallel port, a serial port, a keyboard port, a mouse port, or the like.

A program is provided by computer-readable media such as the DVD-ROM 2201 or the IC card. The program is read from the computer-readable media, installed into the hard disk drive 2224, RAM 2214, or ROM 2230, which are also examples of computer-readable media, and executed by the CPU 2212. The information processing described in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is executed between the computer 2200 and an external device, the CPU 2212 may execute a communication program loaded onto the RAM 2214, and instruct the communication interface 2222 to process the communication based on the processing written in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc. and perform various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. Moreover, the CPU 2212 may retrieve information in a file, a database, or the like in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The program or software modules described above may be stored in the computer-readable media on or near the computer 2200. In addition, a recording medium such as a hard disk or a RAM provided in a server system connected to a dedicated communication network or the Internet can be used as the computer-readable media, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. The scope of the invention is defined by the appended claims.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

EXPLANATION OF REFERENCES

1: system; 2: manufacturing apparatus; 3: supporting apparatus; 10: acquisition unit; 20: learning unit; 30: input unit; 40: prediction unit; 50: recommendation unit; 60: display unit; 62: display processing unit; 64: display apparatus; 70: transmission unit; 200: screen; 210: item name; 220: slider bar; 230: pointer; 240: current value; 250: list box; 260: prediction value box; 300: screen; 400: screen; 500: screen; 600: screen; 700: screen; 2200: computer; 2201: DVD-ROM; 2210: host controller; 2212: CPU; 2214: RAM; 2216: graphics controller; 2218: display device; 2220: input/output controller; 2222: communication interface; 2224: hard disk drive; 2226: DVD-ROM drive; 2230: ROM; 2240: input/output chip; 2242: keyboard.

**Claims**

1. An apparatus (3) configured to support resin molding, comprising:

   a prediction unit (40) configured to generate a probability distribution of prediction values of analysis target characteristics of a resin molded body, that correspond to values of a plurality of molding factors of the resin molding; and
   a display processing unit (62) configured to execute display processing for causing a display apparatus (64) to display the probability distribution of the prediction values of the analysis target characteristics,
   wherein
   the prediction unit (40) is configured to calculate a change of the probability distribution of the prediction values of the analysis target characteristics when a value of at least one of the plurality of molding factors of the resin molding is changed within a predetermined range, and
   the display processing unit (62) is configured to execute display processing for causing the display apparatus (64) to display the change of the probability distribution of the prediction values of the analysis target characteristics and to execute display processing for causing the display apparatus to display a range of the molding factors that have a possibility of satisfying a target value of the analysis target characteristics.

2. The apparatus (3) according to claim 1, wherein

   the prediction unit (40) is configured to calculate, as an indicator that indicates the change of the probability distribution, a change of a mean value and a change of a standard deviation of the prediction values of the analysis target characteristics, and
   the display processing unit (62) is configured to execute display processing for causing the display apparatus (64) to display the change of the mean value and the change of the standard deviation.

3. The apparatus (3) according to claim 1 or 2, further comprising

   an input unit (30) configured to accept a designation of a value of at least one of the plurality of molding factors of the resin molding from a user,

wherein

the display processing unit (62) is configured to execute display processing for causing the display apparatus to display, together with the probability distribution of the prediction values, the probability distribution of the prediction values of the analysis target characteristics at the value of the molding factor, which is designated.

4. The apparatus (3) according to any one of claims 1 to 3, wherein

the prediction unit (40) is configured to include a model for generating the probability distribution of the prediction values of the analysis target characteristics according to an input of data with respect to at least one of the plurality of molding factors of the resin molding.

5. The apparatus (3) according to claim 4, wherein

the prediction unit (40) is configured to generate each of the prediction values of the analysis target characteristics using a plurality of the models, and calculate a mean value and a standard deviation of the generated prediction values.

6. The apparatus (3) according to any one of claims 1 to 5, further comprising

a recommendation unit (50) configured to generate a recommendation condition as a combination of the plurality of molding factors having a highest probability of satisfying a target value of the analysis target characteristics, wherein

the display processing unit (62) is configured to execute display processing for causing the display apparatus to display the recommendation condition together with a change of the probability distribution of the prediction values.

7. The apparatus (3) according to any one of claims 1 to 6, wherein

the prediction unit (40) is configured to include

an acquisition unit (10) configured to acquire learning data including sets of the values of the plurality of molding factors and values of the analysis target characteristics that are obtained as a result of performing the resin molding in advance, and

a learning unit (20) configured to learn a model for generating the prediction values of the analysis target characteristics from the values of the plurality of molding factors using the learning data.

8. The apparatus (3) according to any one of claims 1 to 7, wherein

the prediction unit (40) is configured to calculate the probability of satisfying a target value of the analysis target characteristics in at least one of the plurality of molding factors of the resin molding, and

the display processing unit (62) is configured to execute display processing for causing the display apparatus (64) to display the probability of satisfying the target value of the analysis target characteristics together with the probability distribution of the prediction values.

9. The apparatus (3) according to claim 8, wherein

the prediction unit (40) is configured to calculate a change of the probability of satisfying the target value of the analysis target characteristics when a value of at least one of the plurality of molding factors of the resin molding is changed within a predetermined range, and

the display processing unit (62) is configured to execute display processing for causing the display apparatus to display the change of the probability of satisfying the target value of the analysis target characteristics together with the probability distribution of the prediction values.

10. A method of supporting resin molding, comprising:

generating a probability distribution of prediction values of analysis target characteristics of a resin molded body, that correspond to values of a plurality of molding factors of the resin molding; and

executing display processing for causing a display apparatus to display the probability distribution of the prediction values of the analysis target characteristics, wherein

the generating a probability distribution of prediction values includes calculating a change of the probability distribution of the prediction values of the analysis target characteristics when a value of at least one of the plurality of molding factors of the resin molding is changed within a predetermined range, and
the executing display processing includes executing display processing for causing the display apparatus to display the change of the probability distribution of the prediction values of the analysis target characteristics and executing display processing for causing the display apparatus to display a range of the molding factors that have a possibility of satisfying a target value of the analysis target characteristics.

11. A computer program comprising instructions which, when the program is executed by a computer, cause the apparatus (3) of any one of claims 1 - 9 to execute the steps of the method of claim 10.

**Patentansprüche**

1. Vorrichtung (3), die konfiguriert ist, um das Harzgießen zu unterstützen, umfassend:

   eine Vorhersageeinheit (40), die konfiguriert ist, um eine Wahrscheinlichkeitsverteilung von Vorhersagewerten von Analysezieleigenschaften eines Harzformkörpers zu erzeugen, die Werten einer Vielzahl von Formungsfaktoren des Harzformens entsprechen; und
   eine Anzeigeverarbeitungseinheit (62), die konfiguriert ist, um eine Anzeigeverarbeitung auszuführen, um eine Anzeigevorrichtung (64) zu veranlassen, die Wahrscheinlichkeitsverteilung der Vorhersagewerte der Analysezieleigenschaften anzuzeigen, wobei
   die Vorhersageeinheit (40) konfiguriert ist, um eine Änderung der Wahrscheinlichkeitsverteilung der Vorhersagewerte der Analysezieleigenschaften zu berechnen, wenn ein Wert von mindestens einer der Vielzahl von Formungsfaktoren der Harzformung innerhalb eines vorgegebenen Bereichs geändert wird, und
   die Anzeigeverarbeitungseinheit (62) konfiguriert ist, um eine Anzeigeverarbeitung auzuführen, um zu veranlassen, dass die Anzeigevorrichtung (64) die Änderung der Wahrscheinlichkeitsverteilung der Vorhersagewerte der Analysezieleigenschaften anzeigt, und eine Anzeigeverarbeitung ausführt, um zu veranlassen, dass die Anzeigevorrichtung einen Bereich der Formungsfaktoren anzeigt, die eine Möglichkeit haben, einen Zielwert der Analysezieleigenschaften zu erfüllen.

2. Vorrichtung (3) nach Anspruch 1, wobei

   die Vorhersageeinheit (40) konfiguriert ist, um als einen Indikator, der die Änderung der Wahrscheinlichkeitsverteilung anzeigt, eine Änderung eines Mittelwerts und eine Änderung einer Standardabweichung der Vorhersagewerte der Analysezieleigenschaften zu berechnen, und
   die Anzeigeverarbeitungseinheit (62) konfiguriert ist, um eine Anzeigeverarbeitung durchzuführen, um die Anzeigevorrichtung (64) zu veranlassen, die Änderung des Mittelwerts und die Änderung der Standardabweichung anzuzeigen.

3. Vorrichtung (3) nach Anspruch 1 oder 2, weiter umfassend

   eine Eingabeeinheit (30), die konfiguriert ist, um eine Bestimmung eines Wertes von mindestens einer der Vielzahl von Formungsfaktoren der Harzformung von einem Benutzer anzunehmen, wobei
   die Anzeigeverarbeitungseinheit (62) konfiguriert ist, um eine Anzeigeverarbeitung auszuführen, um zu veranlassen, dass die Anzeigevorrichtung zusammen mit der Wahrscheinlichkeitsverteilung der Vorhersagewerte die Wahrscheinlichkeitsverteilung der Vorhersagewerte der Analysezieleigenschaften bei dem Wert des Formungsfaktors anzeigt, der bestimmt ist.

4. Vorrichtung (3) nach einem der Ansprüche 1 bis 3, wobei
   die Vorhersageeinheit (40) konfiguriert ist, um ein Modell zum Erzeugen der Wahrscheinlichkeitsverteilung der Vorhersagewerte der Analysezieleigenschaften gemäß einer Dateneingabe in Bezug auf mindestens einen der Vielzahl von Formungsfaktoren des Harzformens einzuschließen.

5. Vorrichtung (3) nach Anspruch 4, wobei
   die Vorhersageeinheit (40) konfiguriert ist, um jeden der Vorhersagewerte der Analysezieleigenschaften unter Verwendung einer Vielzahl der Modelle zu erzeugen und einen Mittelwert und eine Standardabweichung der erzeugten Vorhersagewerte zu berechnen.

14

6. Vorrichtung (3) nach einem der Ansprüche 1 bis 5, weiter umfassend

eine Empfehlungseinheit (50), die konfiguriert ist, um eine Empfehlungsbedingung als eine Kombination aus der Vielzahl von Formungsfaktoren zu erzeugen, die eine höchste Wahrscheinlichkeit aufweist, einen Zielwert der Analysezieleigenschaften zu erfüllen,
wobei
die Anzeigeverarbeitungseinheit (62) konfiguriert ist, um eine Anzeigeverarbeitung auszuführen, um die Anzeigevorrichtung zu veranlassen, die Empfehlungsbedingung zusammen mit einer Änderung der Wahrscheinlichkeitsverteilung der Vorhersagewerte anzuzeigen.

7. Vorrichtung (3) nach einem der Ansprüche 1 bis 6, wobei

wobei die Vorhersageeinheit (40) konfiguriert ist zum Einschließen
einer Aufnahmeeinheit (10), die konfiguriert ist zum Aufnehmen von Lerndaten einschließlich der Sätze der Werte der Vielzahl von Formungsfaktoren und der Werte der Analysezieleigenschaften, die als Ergebnis der Durchführung der Harzformung im Voraus erhalten werden, und
eine Lerneinheit (20), die konfiguriert ist, um ein Modell zum Erzeugen der Vorhersagewerte der Analysezieleigenschaften aus den Werten der Vielzahl von Formungsfaktoren unter Verwendung der Lerndaten zu lernen.

8. Vorrichtung (3) nach einem der Ansprüche 1 bis 7, wobei

die Vorhersageeinheit (40) konfiguriert ist, um die Wahrscheinlichkeit zu berechnen, dass ein Zielwert der Analysezieleigenschaften in mindestens einer der Vielzahl von Formungsfaktoren der Harzformung erfüllt wird, und
die Anzeigeverarbeitungseinheit (62) konfiguriert ist, um eine Anzeigeverarbeitung auzuführen, um zu veranlassen, dass die Anzeigevorrichtung (64) die Wahrscheinlichkeit, den Zielwert der Analysezieleigenschaften zu erfüllen, zusammen mit der Wahrscheinlichkeitsverteilung der Vorhersagewerte anzeigt.

9. Vorrichtung (3) nach Anspruch 8, wobei

die Vorhersageeinheit (40) konfiguriert ist, um eine Änderung der Wahrscheinlichkeit, den Zielwert der Analysezieleigenschaften zu erfüllen, zu berechnen, wenn ein Wert von mindestens einer der Vielzahl von Formungsfaktoren der Harzformung innerhalb eines vorgegebenen Bereichs geändert wird, und
die Anzeigeverarbeitungseinheit (62) konfiguriert ist, um eine Anzeigeverarbeitung auszuführen, um die Anzeigevorrichtung zu veranlassen, die Änderung der Wahrscheinlichkeit, den Zielwert der Analysezieleigenschaften zu erfüllen, zusammen mit der Wahrscheinlichkeitsverteilung der Vorhersagewerte anzuzeigen.

10. Verfahren zur Unterstützung des Harzgießens, umfassend:

Erzeugen einer Wahrscheinlichkeitsverteilung von Vorhersagewerten von Analysezieleigenschaften eines Harzformkörpers, die den Werten einer Vielzahl von Formungsfaktoren des Harzformverfahrens entsprechen; und
Ausführen einer Anzeigeverarbeitung, um eine Anzeigevorrichtung zu veranlassen, die Wahrscheinlichkeitsverteilung der Vorhersagewerte der Analysezieleigenschaften anzuzeigen, wobei
das Erzeugen einer Wahrscheinlichkeitsverteilung von Vorhersagewerten das Berechnen einer Änderung der Wahrscheinlichkeitsverteilung der Vorhersagewerte der Analysezieleigenschaften einschließt, wenn ein Wert von mindestens einem der Vielzahl von Formungsfaktoren der Harzformung innerhalb eines vorbestimmten Bereichs geändert wird, und
das Ausführen der Anzeigeverarbeitung das Ausführen der Anzeigeverarbeitung einschließt, um die Anzeigevorrichtung zu veranlassen, die Änderung der Wahrscheinlichkeitsverteilung der Vorhersagewerte der Analysezieleigenschaften anzuzeigen, und das Ausführen der Anzeigeverarbeitung, um die Anzeigevorrichtung zu veranlassen, einen Bereich der Formungsfaktoren anzuzeigen, die eine Möglichkeit haben, einen Zielwert der Analysezieleigenschaften zu erfüllen.

11. Computerprogramm, das Anweisungen umfasst, die, wenn das Programm von einem Computer ausgeführt wird, die Vorrichtung (3) nach einem der Ansprüche 1 - 9 veranlassen, die Schritte des Verfahrens nach Anspruch 10 auszuführen.

**Revendications**

1. Appareil (3) configuré pour aider au moulage de résine, comprenant :

   une unité de prédiction (40) configurée pour générer une distribution de probabilité de valeurs de prédiction de caractéristiques cibles d'analyse d'un corps moulé en résine, qui correspondent à des valeurs d'une pluralité de facteurs de moulage du moulage de résine ; et
   une unité (62) de traitement d'affichage configurée pour exécuter un traitement d'affichage afin d'amener un appareil d'affichage (64) à afficher la distribution de probabilité des valeurs de prédiction des caractéristiques cibles d'analyse, dans lequel
   l'unité de prédiction (40) est configurée pour calculer une modification de la distribution de probabilité des valeurs de prédiction des caractéristiques cibles d'analyse lorsqu'une valeur d'au moins un facteur de moulage de la pluralité de facteurs de moulage du moulage de résine est modifiée dans une plage prédéterminée, et
   l'unité (62) de traitement d'affichage est configurée pour exécuter un traitement d'affichage pour amener l'appareil d'affichage (64) à afficher la modification de la distribution de probabilité des valeurs de prédiction des caractéristiques cibles d'analyse et pour exécuter un traitement d'affichage afin d'amener l'appareil d'affichage à afficher une plage des facteurs de moulage qui présentent une possibilité de satisfaction d'une valeur cible des caractéristiques cibles d'analyse.

2. Appareil (3) selon la revendication 1, dans lequel

   l'unité de prédiction (40) est configurée pour calculer, en tant qu'indicateur qui indique la modification de la distribution de probabilité, une modification d'une valeur moyenne et une modification d'un écart type des valeurs de prédiction des caractéristiques cibles d'analyse, et
   l'unité (62) de traitement d'affichage est configurée pour exécuter un traitement d'affichage pour amener l'appareil d'affichage (64) à afficher la modification de la valeur moyenne et la modification de l'écart type.

3. Appareil (3) selon la revendication 1 ou la revendication 2, comprenant en outre

   une unité d'entrée (30) configurée pour accepter une désignation d'une valeur d'au moins un facteur de moulage de la pluralité de facteurs de moulage du moulage de résine provenant d'un utilisateur,
   dans lequel
   l'unité (62) de traitement d'affichage est configurée pour exécuter un traitement d'affichage pour amener l'appareil d'affichage à afficher, conjointement avec la distribution de probabilité des valeurs de prédiction, la distribution de probabilité des valeurs de prédiction des caractéristiques cibles d'analyse à la valeur du facteur de moulage, qui est désignée.

4. Appareil (3) selon l'une quelconque des revendications 1 à 3, dans lequel
   l'unité de prédiction (40) est configurée pour inclure un modèle pour la génération de la distribution de probabilité de valeurs de prédiction des caractéristiques cibles d'analyse selon une entrée de données par rapport à au moins un facteur de moulage de la pluralité de facteurs de moulage du moulage de résine.

5. Appareil (3) selon la revendication 4, dans lequel
   l'unité de prédiction (40) est configurée pour générer chacune des valeurs de prédiction des caractéristiques cibles d'analyse en utilisant une pluralité des modèles, et calculer une valeur moyenne et un écart type des valeurs de prédiction générées.

6. Appareil (3) selon l'une quelconque des revendications 1 à 5, comprenant en outre

   une unité de recommandation (50) configurée pour générer une condition de recommandation en tant que combinaison de la pluralité de facteurs de moulage présentant une probabilité de satisfaction d'une valeur cible la plus élevée des caractéristiques cibles d'analyse,
   dans lequel
   l'unité (62) de traitement d'affichage est configurée pour exécuter un traitement d'affichage pour amener l'appareil d'affichage à afficher la condition de recommandation conjointement avec une modification de la distribution de probabilité des valeurs de prédiction.

7. Appareil (3) selon l'une quelconque des revendications 1 à 6, dans lequel

l'unité de prédiction (40) est configurée pour inclure

une unité d'acquisition (10) configurée pour acquérir des données d'apprentissage incluant des ensembles des valeurs de la pluralité de facteurs de moulage et des valeurs des caractéristiques cibles d'analyse qui sont obtenues en résultat de la mise en oeuvre du moulage de résine à l'avance, et

une unité d'apprentissage (20) configurée pour apprendre un modèle pour générer les valeurs de prédiction des caractéristiques cibles d'analyse à partir des valeurs de la pluralité de facteurs de moulage en utilisant les données d'apprentissage.

8. Appareil (3) selon l'une quelconque des revendications 1 à 7, dans lequel

l'unité de prédiction (40) est configurée pour calculer la probabilité de satisfaction d'une valeur cible des caractéristiques cibles d'analyse dans au moins un facteur de moulage de la pluralité de facteurs de moulage du moulage de résine, et

l'unité (62) de traitement d'affichage est configurée pour exécuter un traitement d'affichage pour amener l'appareil d'affichage (64) à afficher la probabilité de satisfaction de la valeur cible des caractéristiques cibles d'analyse conjointement avec la distribution de probabilité des valeurs de prédiction.

9. Appareil (3) selon la revendication 8, dans lequel

l'unité de prédiction (40) est configurée pour calculer une modification de la probabilité de satisfaction de la valeur cible des caractéristiques cibles d'analyse lorsqu'une valeur d'au moins un facteur de moulage de la pluralité de facteurs de moulage du moulage de résine est modifiée dans une plage prédéterminée, et

l'unité (62) de traitement d'affichage est configurée pour exécuter un traitement d'affichage pour amener l'appareil d'affichage à afficher la modification de la probabilité de satisfaction de la valeur cible des caractéristiques cibles d'analyse conjointement avec la distribution de probabilité des valeurs de prédiction.

10. Procédé d'aide au moulage de résine, comprenant :

la génération d'une distribution de probabilité de valeurs de prédiction de caractéristiques cibles d'analyse d'un corps moulé en résine, qui correspondent à des valeurs d'une pluralité de facteurs de moulage du moulage de résine ; et

l'exécution d'un traitement d'affichage pour amener un appareil d'affichage à afficher la distribution de probabilité des valeurs de prédiction des caractéristiques cibles d'analyse, dans lequel

la génération d'une distribution de probabilité de valeurs de prédiction inclut le calcul d'une modification de la distribution de probabilité des valeurs de prédiction des caractéristiques cibles d'analyse lorsqu'une valeur d'au moins un facteur de moulage de la pluralité de facteurs de moulage du moulage de résine est modifiée dans une plage prédéterminée, et

l'exécution du traitement d'affichage inclut l'exécution d'un traitement d'affichage pour amener l'appareil d'affichage à afficher la modification de la distribution de probabilité des valeurs de prédiction des caractéristiques cibles d'analyse et à exécuter un traitement d'affichage pour amener l'appareil d'affichage à afficher une plage des facteurs de moulage qui présentent une possibilité de satisfaction d'une valeur cible des caractéristiques cibles d'analyse.

11. Programme informatique comprenant des instructions qui, lorsque le programme est exécuté par un ordinateur, amènent l'appareil (3) selon l'une quelconque des revendications 1 à 9 à mettre en oeuvre les étapes du procédé selon la revendication 10.

FIG.1

INTENSITY : MEAN VALUE100, STANDARD DEVIATION 13 — 260

200

| | | |
|---|---|---|
| MOLD TEMPERATURE SETTING (℃) — 210 | 230 220 240 ——●—— 102.00 | INJECTION SPEED (mm/sec) ———————● 100.00 |
| RESIN TYPE | NAME OF RESIN TYPE ∨ | INJECTION PRESSURE MAXIMUM VALUE (MPa) ——————●——— 156.00 |
| TEMPERATURE 1 (DEGREES) | 250 ●——————— 280.00 | SCREW SPEED (rpm) ———————● 100.00 |
| TEMPERATURE 2 (DEGREES) | —————————●——— 320.00 | |
| TEMPERATURE 3 (DEGREES) | —————————●——— 320.00 | |

FIG.2

*FIG.3*

| NEXT RECOMMENDED MOLDING CONDITION | | | |
|---|---|---|---|
| RECOMMENDATION ORDER | 1 | 2 | 3 |
| TEMPERATURE 2 | 120° | 130°C | 110°C |
| RESIN TYPE | GRADE A | GRADE B | GRADE A |

400

*FIG.4*

START

RESIN MOLDING    S500

ACQUIRE LEARNING DATA    S510

LEARN MODEL    S520

END

*FIG.5*

START

ACQUIRE ANALYSIS TARGET
CHARACTERISTICS    S600

GENERATE PREDICTION DATA    S610

GENERATE RECOMMENDATION
CONDITION    S620

DISPLAY    S630

END

*FIG.6*

*FIG.7*

*FIG.8*

*FIG.9*

*FIG.10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006123172 A
- US 2008102147 A1
- JP 2017081071 A
- US 7216005 B2
- JP 2017119425 A